# EUROPEAN PATENT SPECIFICATION

(11) **EP 3 061 086 B1**
(45) Date of publication and mention of the grant of the patent: **23.10.2019**
(21) Application number: 13895867.3
(22) Date of filing: 24.10.2013
(51) Int. Cl.: G10L 25/69, G10L 13/04, G10L 13/08

(54) **TEXT-TO-SPEECH PERFORMANCE EVALUATION**
TEXT-ZU-SPRACHE-LEISTUNGSBEURTEILUNG
ÉVALUATION DE LA PERFORMANCE D'UNE CONVERSION TEXTE-PAROLE

(43) Date of publication of application: 31.08.2016
(73) Proprietor: Bayerische Motoren Werke Aktiengesellschaft, 80809 München (DE)
(72) Inventor: ISERT, Carsten, 80333 München (DE); LAI, Sam, Shanghai 200122 (CN); Süß, Christian, 85256 Vierkirchen (DE); HU, Helen, Beijing 100176 (CN)
(86) International application number: PCT/CN2013/085878
(87) International publication number: WO 2015/058386

(56) References cited:
- GB-A- 2 423 903
- US-A1- 2002 184 029
- US-A1- 2003 154 081
- US-A1- 2008 167 876
- US-A1- 2008 172 234
- US-A1- 2010 125 459
- US-A1- 2011 054 903

## Description

### FIELD OF THE INVENTION

The present invention relates in general to the field of text-to-speech (TTS) synthesis, and in more particular, to a method and a computer readable medium for performance evaluation of text-to-speech synthesis.

### BACKGROUND OF THE INVENTION

The voice control technology has been researched for more than twenty years, and many of the proposed benefits have been demonstrated in varied applications. Continuing advances in computer hardware and software are making the use of voice control technology more practical, flexible, and reliable. As a result, the voice control system becomes more and more popular in modern electronic apparatuses. For example, the voice control system has been incorporated into smart phone, in-vehicle electronic apparatus (such as iSpeech system available from BMW Corp.), smart home applications, and the like.

The voice control system is typically based on speech recognition and text-to-speech (TTS) synthesis. The speech recognition can convert a user-originated audio signal to a corresponding command, based on which the electronic apparatus performs a particular operation. On the other hand, the text-to-speech synthesis provides voice read-out function to users. For instance, in the context of an onboard electronic apparatus, the speech recognition can let the driver control features such as the telephone, climate control, navigation and sound systems with spoken commands, and the text-to-speech synthesis can provide voice navigation information or read an email or SMS message for the driver. This is not only more comfortable, but also safe: The driver's hands remain on the steering wheel at all time, and he (she) is not distracted from the surrounding traffic.

Text-to-speech synthesis is the transform of text to speech. This transformation converts the text to synthetic speech that is as close to real human speech as possible in compliance with the pronunciation norms of special languages. In general, the TTS synthesis comprises a first step of natural language processing. More specifically, the text input are converted into a linguistic representation that includes the phonemes to be produced, their duration, the location of phrase boundaries, and the pitch/frequency contours for each phrase. Then, the second step of TTS synthesis is to convert the phonetic transcription and prosody information obtained in the linguistic analysis stage into an acoustic waveform by digital signal processing. The TTS synthesis system is also described in more detail by K. R. Aida-Zade, et. al., in "the main principles of text-to-speech synthesis system", International Journal of Signal Processing, Vol. 6, No. 1, 2010.

The quality of TTS is very important because it is related to whether the voice output generated by TTS synthesis system or engine can be understood by customer, and whether the customer will feel comfortable when listening to it. The most critical qualities of a speech synthesis system are naturalness and intelligibility. Naturalness describes how closely the output sounds like human speech, while intelligibility is the ease with which the output is understood. The ideal speech synthesizer is both natural and intelligible. Speech synthesis systems usually try to maximize both characteristics.

Currently, there are a number of TTS engines available, such as Siri from Apple Corp, SAM from Microsoft Corp., Android TTS engines, and many other internet TTS engines. Thus, a challenge arises in terms of how to evaluate such engines for the purpose of selecting the best TTS product to customers. TTS evaluation is intended to evaluate the speech generated by TTS synthesis engines with regard to important criteria such as intelligibility and naturalness. Subject evaluation methods are commonly used in the evaluation of TTS performance, such as MOS (Mean Opinion Score), DRT (Diagnostic Rhyme Test), DAM (Diagnostic Acceptability Measure), CT (Comprehension Test), and the like.

Taking MOS as an example, it is conducted by averaging the results of a set of standard and subjective tests where a number of listeners rate the perceived voice quality of test sentences generated by the TTS synthesis engine. The following Table 1 shows MOS rating scheme. The MOS is expressed as a single number in the range 1 to 5, where 1 is lowest perceived audio quality, and 5 is the highest perceived audio quality measurement. The perceptual score of each test sentence is calculated by taking the mean of all scores from all listeners.

**Table 1: MOS rating scheme**

| MOS rate score | Quality | Impairment |
|---|---|---|
| 5 | Excellent | Imperceptible |
| 4 | Good | Perceptible but not annoying |
| 3 | Fair | Slightly annoying |
| 2 | Poor | Annoying |
| 1 | Bad | Very annoying |

Just as implied by its name, subject evaluation methods rely on the personal subjective perception of listeners, which means the result will be influenced by the randomness of individual reactions to test sentences. To reduce the result's uncertainty and increase the result's repeatability, usually there are strict requirements to the test devices, data, conditions, and listeners (i.e., ideally the test environments for different participants should be strictly consistent). In general, subject evaluation methods are very time-, labour-, and cost-consuming.

On the other hand, the subject evaluation method cannot automatically generate TTS performance evaluation result. Up to now, there is no existing solution to automatically evaluate the performance of different TTS synthesis engines. Currently, there are many companies providing TTS products, and a TTS performance evaluation system which can automatically generate evaluation result in an efficient and unbiased way, is highly desired for the purpose of selecting the best TTS product to customers. It is also very desirable in the process of developing a TTS based product either for the supplier or the original equipment manufacturer (OEM) as iterations of the product can be evaluated if performance has improved or declined. Subject evaluation methods might be suitable for scientific researches, but cannot fulfill the industrial level requirements.

GB 2423903 A discloses a method for assessing subjective quality of a TTS system. According to this method, TTS speech generated by the TTS system to be assessed and natural speech are processed by a perceptual model and then compared with each other by an error model. The error model outputs objective error measurements, which are mapped by a cognitive model to a subjective measurement that indicates the quality of the TTS system. US 2002/0184029 A1 discloses a specific TTS system in which clues are provided as to the quality of a final synthesized speech, e.g. the degree of syntactic ambiguity in the text, the number of alternative intonation contours etc. The clues are combined to a feature vector by which a TTS confidence classifier can be trained. US 2003/0154081 A1 discloses an objective measure for estimating mean score of synthesized speech. A set of synthesized utterances is created, which are then subjectively rated. A score is then calculated for each of the synthesized utterances using an objective measure.

### SUMMARY OF THE INVENTION

An aspect of the present invention is to provide a method and a computer readable medium according to claims 1 and 2, respectively.

### BRIEF DESCRIPTION OF THE DRAWINGS

The above and other aspects and advantages of the present invention will become apparent from the following detailed description of exemplary embodiments taken in conjunction with the accompanying drawings which illustrate, by way of example, the principles of the invention.
Fig. 1 illustrates a high level flow chart showing a method for performance evaluation of text-to-speech synthesis in accordance with an exemplary embodiment of the present invention;
Fig. 2 illustrates a flow chart showing a method for preparing a plurality of speech samples and associated scores in accordance with an exemplary embodiment of the present invention;
Fig. 3 illustrates a flow chart showing a speech modeling process using the plurality of speech samples and associated scores in accordance with an exemplary embodiment of the present invention;
Fig. 4 illustrate a flow chart showing a TTS performance evaluation process in accordance with an exemplary embodiment of the present invention; and
Fig. 5 illustrate a block diagram of a system for TTS performance evaluation in accordance with an exemplary embodiment of the present invention.

### DETAILED DESCRIPTION OF THE PREFERRED EMBODIMENTS

In the following detailed description, numerous specific details are set forth to provide a thorough understanding of the described exemplary embodiments. It will be apparent, however, to one skilled in the art that the described embodiments can be practiced without some or all of these specific details. In other exemplary embodiments, well known structures or process steps have not been described in detail in order to avoid unnecessarily obscuring the concept of the present invention.

A general idea of the present invention is to solve the problem of automatic TTS evaluation by a supervised machine learning approach combining several aspects. This is down in two phases: data sampling and rating phase; and speech modeling and evaluation phase.

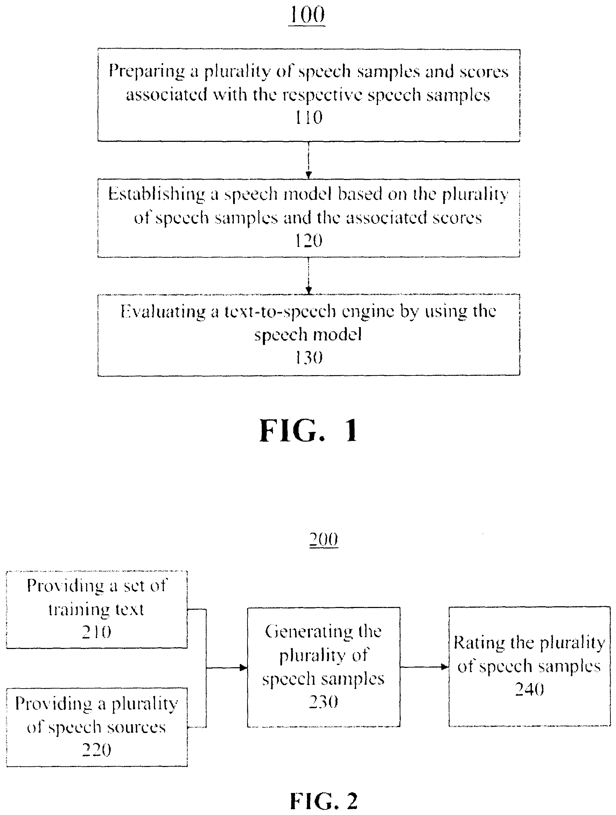

Referring first to Fig. 1, there is shown a high level flow chart of a method 100 for performance evaluation of text-to-speech (TTS) synthesis in accordance with an exemplary embodiment of the present invention. The method 100 starts with preparing 110 a plurality of speech samples and scores associated with the respective speech samples. Then, a speech model may be established 120 based on the plurality of speech samples and the corresponding scores. Subsequently, the speech model may be used to evaluate 130 a TTS engine.

Now, the method 100 will be discussed with many specific details. Again, such specific details are given by way of example, and the present invention may be practiced without some or all of the details. Fig. 2 is a flow chart illustrating a process 200 for preparing the plurality of speech samples and scores associated thereto. As shown at 210, a set of training text ("training" will be discussed later) may be provided. The training text may include words, phrases, idioms, and sentences, or any combination thereof. In selected embodiments, sentences are preferred. The set of training text may be as diverse as possible so as to cover a wide range of usage situations. For instance, the set of training text may include sentences relating to smart phone operations, computer operations, navigation, game console, sports, news, date/times, weather/temperature, literature, science, and other fields. The set of training text may also include from easy/simple words to difficult/complex sentences. As seen from the following discussion, the diversity of the training set is beneficial to the training of the speech model.

In addition, a plurality of speech sources is provided at 220. The plurality of speech sources may include TTS engines and human beings. The TTS engines may range from the first TTS engine in the history to the latest TTS engine today and from quite bad TTS engines to the best engines. In selected embodiments, it is preferable to include only a few numbers of really bad examples while focusing mostly on current engines with their advantages and disadvantages which are usually currently known, for example, TTS engines good at smart phone operation, TTS engines good at navigation, TTS engines good at news, and the like. Likewise, human beings may include person with different dialects and different clarity of pronunciation. Also, human beings may include both male and female.

Thus, the plurality of speech samples may be prepared by the speech sources reading the set of training text at 230. As for the TTS engines among the speech sources, the set of training text may be provided via an application programming interface (API) to each of the TTS engines, which converts the text into speech that is recorded in a predetermined format and stored as speech samples in a non-transitory storage medium. As for the human speaker, the speech samples may be recorded by a sound recording device such as microphone and associated sound recording software. Also, the speech samples are formatted the same as those from the TTS engines and stored in the non-transitory storage medium. Preferably, the speech samples are recorded in the same environment, such as recording equipment, recording software and parameter settings thereof, noise level, or the like. At this point of the process, a very large number of speech samples may be generated. For example, if M is the number of training sentences (or words, phrases and idioms) and N the number of speech sources are prepared, then M^{*}N speech samples will be produced.

Then, the plurality of speech samples may be rated at 240 so as to evaluate the performance of the generated speech samples in relation to the human speech, i.e., intelligibility and naturalness. As discussed above, the speech samples may be evaluated by subject evaluation methods, suitable examples of which may include Mean Opinion Score (MOS), Diagnostic Acceptability Measure (DAM), and Comprehension Test (CT) in embodiments of the present invention.

A typical MOS test will firstly include recruiting enough numbers of human listeners with sufficient diversity for delivering a statistically significant result. Then, the sample listening experiments are conducted in a controlled environment with specific acoustic characteristics and equipments, to ensure every listener receives the same instructions and stimuli for rating the speech samples in a way as fair as possible. MOS test is also specified in more detail by ITU-T (International Telegraph Union-Telecommunication Standardization Sector) recommendation P.800.

As this is a large scale approach, the tasks of rating the speech samples can also be distributed using a crowd sourcing approach. More specifically, the speech samples can be dispensed, for example, via internet, to a large group of people including volunteers and part-time workers such that people can sit at home and rate these speech samples using their own hardware in their spare time. The rating results can also be collected via internet. Thus, cost for the rating may be reduced.

By the MOS test, each speech sample is assigned with an MOS score (as shown in Table 1). The MOS score may be used directly as an evaluation score of the corresponding speech sample. In another embodiment, the speech samples may be weighted. For example, a simple sentence may have a lower weight, while a complex sentence may have a higher weight. A product of the assigned MOS score and the weight may be used as the evaluation score of the speech sample. The weight may help enlarge performance difference between respective speech sources.

DAM may estimate intelligibility, pleasantness and overall acceptability of each speech sample, while CT is to measure listeners' comprehension or the degree of received messages being understood. Since both DAM and CT are well known in the relevant art, a detailed description thereof is omitted herein.

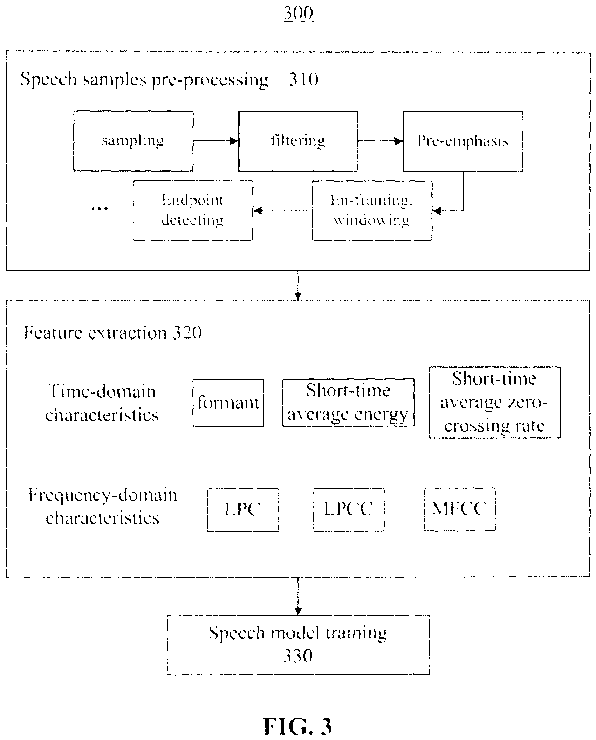

At the end of the process 200, the plurality of speech samples and scores associated with the respective speech samples have been provided. Then, with reference to Fig. 3, a speech modeling process 300 may be performed by using the speech samples and associated scores. The speech modeling process 300 may start with a pre-processing procedure 310 by which the speech samples are pre-processed for subsequent procedures. Generally, this pre-processing procedure 310 may include signal sampling, filtering, pre-emphasis, en-framing, windowing and endpoint detecting, etc., which are familiar to those experienced in the speech research field.

Then, the process 300 flows to a feature extraction procedure 320 where features are extracted from the pre-processed waveforms. The features in speech research field usually consist of two types: time-domain features and frequency-domain features. Time-domain features include formant, short-time average energy, short-time average zero-crossing rate, etc. Frequency-domain features include Linear Prediction Coefficients (LPC), Linear Prediction Cepstral Coefficients (LPCC), Mel-Frequency Cepstral Coefficients (MFCC), etc. One or more of the listed time- or frequency-domain features may be selected for use in embodiments of the present invention.

It should be noted that there has already been a lot of research on how to pre-process and extract features from the speech samples for natural language processing, in addition to those discussed above, and these pre-processing and feature extraction approaches can be directly used in embodiments of the present invention.

Next, the extracted features along with associated scores are used at 330 for speech model training by a supervised machine learning algorithm. The feature data from the procedure 320 and associated scores are trained to build up a mathematical model representing the corresponding human speech. Many statistical models and parameter training algorithms can be used at 330, including but not limited to Hidden Markov Model (HMM), SVM (Support Vector Machine), Deep Learning, Neural Networks, or the like.

Taking HMM as an example, which is a popular statistical tool for modeling speech, Baum-Welch algorithm may be applied to get the optimum HMM model parameters from the training data. A general process may be as follows. Assuming M^{*}N number of speech samples and associated scores have been prepared from M number of training sentences and N number of speech sources (including TTS engines and human speakers). Feature data extracted from each of the M^{*}N number of speech samples represents an observation sequence O. So, there are M^{*}N number of observation sequences Oᵢⱼ (i=1, ..., M; j=1, ..., N), and each observation sequences Oᵢⱼ is correlated with a score, such as an MOS score. The MOS score represents the probability P(Oᵢⱼ|λ) of the observation sequence Oᵢⱼ, given the HMM model λ.

The training process is to optimize parameters of the HMM model by, for example, Baum-Welch algorithm, so as to best model the observation sequences O and the corresponding probability P(O|λ), which is also known as Problem 3 in the HMM research field. For each training sentence Sᵢ (i=1, ..., M), a HMM model λᵢ may be established by training the N number of observation sequences Oᵢⱼ (j=1 to N) corresponding to the training sentence Sᵢ and MOS scores associated to the observation sequences Oᵢⱼ. As a result, M number of HMM models λᵢ (i=1 to M) are generated from the M number of training sentences.

More details about HMM model and its application in speech modeling can be found in "A tutorial on Hidden Markov Models and Selected Applications in Speech Recognition", L. R. Rabiner, Proceedings of The IEEE, Vol. 77, No. 2, 1989. Again, the present invention is not limited to HMM, and other standard techniques of machine learning can also be used to address this problem using the training data and cross validation, etc. Such standard techniques include but are not limited to SVM (Support Vector Machine), Deep Learning, Neural Networks, or the like. As there has already been a lot of research on SVM, Deep Learning and Neural Networks, a repetitive description thereof is omitted herein so as not to obscure the inventive aspects of the present invention.

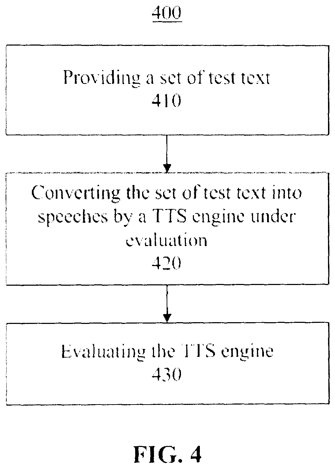

At this point, a speech model has been established, and then it may be used as an evaluation engine to make an automatic evaluation of new TTS engines. An exemplary evaluation procedure 400 is illustrated in Fig. 4. Firstly, a set of test text is prepared at 410. Similar to the training set provided previously at 210, the test set may also include words, phrases, idioms, and sentences, or any combination thereof. In selected embodiments, sentences are preferred. The set of test text may be as diverse as possible so as to cover a wide range of usage situations. For instance, the set of test text may include sentences relating to smart phone operations, computer operations, navigation, game console, sports, news, date/times, weather/temperature, literature, science, and other fields. The set of test text may also include from easy/simple words to difficult/complex sentences. In some preferred embodiments, the test set may be the same as the training set provided previously at 210. In other embodiments, the test set may include more or less elements than the training set. Also, the test set may be provided via an API to the TTS engine under evaluation.

The TTS engine under evaluation then converts at 420 the set of test text into test speeches, which may be recorded automatically by the test framework and stored in a non-transitory storage medium. Based on the established speech model (or evaluation engine), such test speeches may be used to evaluate the corresponding TTS engine.

Before evaluation with the test speeches, the test speeches should also be subjected to pre-processing and feature extraction procedures. The pre-processing and feature extraction procedures may be the same as those discussed relative to steps 310 and 320, and a repetitive description thereof will be omitted herein.

Then, the test speeches (more exactly, the extracted features) may be used to evaluate at 430 the TTS engine by the speech model. Also taking HMM as an example, the evaluation process is known as Problem 1 in the HMM research field. More specifically, the evaluation is performed by using the solution to Problem 1 to score each HMM model λᵢ (i=1 to M) based upon the test features (or observation sequence) and select the highest score. The step is repeated for the set of test text and all the scores are summed up, representing the evaluation result for the TTS engine. Solution to Problem 1 of the HMM model can be found in "A tutorial on Hidden Markov Models and Selected Applications in Speech Recognition", L. R. Rabiner, Proceedings of The IEEE, Vol. 77, No. 2, 1989.

In other embodiments, the set of test text may each be assigned with a weight. For example, a simple test sentence may have a lower weight, while a complex test sentence may have a higher weight. The score may be multiplied by the weight before being summed up.

The method for text-to-speech performance evaluation in accordance with exemplary embodiments of the present invention has been disclosured as above. The embodiments apply already existing speech processing technologies to analyze speech signal, build up a speech model and calculate speech similarity, and proposes an efficient and unbiased solution to automatically evaluate TTS synthesis engine performance. Compared with subject evaluation methods, which needs a lot of participants in order to get a credible evaluation result from the statistical perspective, the present invention only requires one person to generate a standard speech model at the beginning stage, and this speech model can be repetitively used for test and evaluation of different TTS synthesis engines. The proposed solution in this invention largely decreases the required time and labour cost.

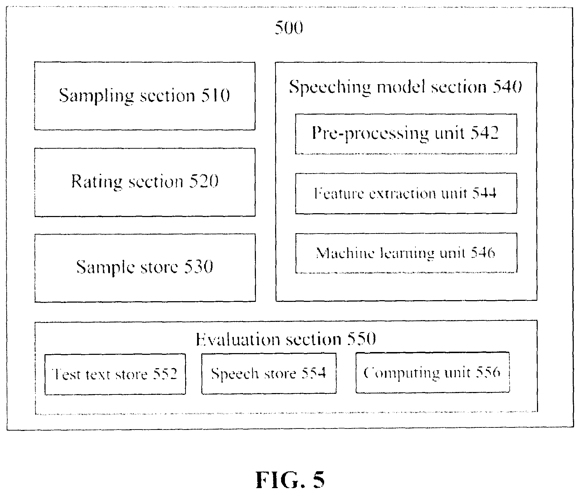

Fig. 5 illustrates a block diagram showing a system 500 for text-to-speech performance evaluation in accordance with an exemplary embodiment of the present invention. The blocks of the system 500 may be implemented by hardware, software, fireware, or any combination thereof to carry out the principles of the present invention. It is understood by those skilled in the art that the blocks described in Fig. 5 may be combined or separated into sub-blocks to implement the principles of the invention as described above. Therefore, the description herein may support any possible combination or separation or further definition of the blocks described herein.

Further, since operations of some components of the system 500 may become apparent with reference to the methods discussed in relation to Figs. 1-4, the system 500 will be described briefly hereinafter.

Referring to Fig. 5, the system 500 may include a sampling section 510 and a rating section 520. The sampling section 510 may be configured to record a plurality of speech samples from a plurality of speech sources based on a same set of training text. The speech sources may include a plurality of TTS engines and human beings with different dialects and different clarity of pronunciation. The sampling section 510 may be implemented as sound recording equipment such as a microphone and/or software such as a sound recording program that record readouts from the speech sources. In other embodiments, the sampling section 510 may be implemented to directly receive speech samples outputted from the plurality of TTS engines. The speech samples generated by the sampling section 510 may be stored in a sample store 530.

The rating section 520 may be configured to rate each of the set of speech samples so as to assign at least a score to each sample. The rating section 520 may be configured to implement a Mean Opinion Score (MOS) test, a Diagnostic Acceptability Measure (DAM) test, Comprehension Test (CT), or the like. The rating section 520 may distribute the plurality of speech samples via network to a plurality of listeners including volunteers and/or part-time workers and collect corresponding scores via network from the plurality of volunteers and/or part-time workers. In some embodiments, each of the plurality of speech sample may have a weight. For example, a simple speech may have a lower weight, while a complex speech may have a higher weight. The rating section 520 may further multiply the score assigned by the listeners by the corresponding weight and output the product as a rating score.

The scores from the rating section 520 may also be stored in the sample store 530 along with the speech samples from the sampling section 510. The sample store 530 may be implemented as a non-transitory storage medium such as a flash memory, a hard disk drive (HDD), an optical disk and the like. The speech samples and corresponding scores may be provided from the sample store 530 to a speech modeling section 540, where they are used to establish a speech model by a selected algorithm. The sample store 530 may be implemented as a local storage near by the speech modeling section 540, or as a remote storage far away from the speech modeling section 540. In the latter case, the samples and scores may be transmitted, for example, via network to the speech modeling section 540.

More specifically, the speech modeling section 540 may include a pre-processing unit 542, a feature extraction unit 544, and a machine learning unit 546. The pre-processing unit 542 may perform a series of pre-processing on the speech samples to obtain pre-processed waveforms for subsequent procedures. The pre-processing may include but is not limited to signal sampling, filtering, pre-emphasis, en-framing, windowing and endpoint detecting, etc., which are familiar to those experienced in the speech research field and thus a detailed description will be omitted herein. Then, the feature extraction unit 544 may extract features from the pre-processed waveforms, including one or more of time-domain features such as formant, short-time average energy, short-time average zero-crossing rate, etc., and frequency-domain features such as Linear Prediction Coefficients (LPC), Linear Prediction Cepstral Coefficients (LPCC), Mel-Frequency Cepstral Coefficients (MFCC), etc. the machine learning unit 546 may utilize the extracted features along with corresponding scores to train a speech model. Standard machine learning techniques may be implemented in the machine learning unit 546, including but not limited to Hidden Markov Model (HMM), Support Vector Machine (SVM), Deep Learning, Neural Networks, or the like. Reference may be made to Fig. 3 and associated description for the machine learning process, and a repetitive description thereof will be omitted herein.

The system 500 may further include an evaluation section 550 that is configured to evaluate one or more new TTS engines by using the speech model after training. The evaluation section 550 may include a test text store 552, a speech store 554 and a computing unit 556. The test text store 552 may contain a set of test text to be provided to the TTS engine under evaluation. The test set may be the same as the training set in selected embodiments, while be different from the training set in other embodiments. The speech store 554 may receive speeches converted by the TTS engine under evaluation from the set of test text. Then, the computing unit 556 may compute a score or a weighted score by using the speech model from the machine learning unit 546 based on the test speeches. Although not shown, the evaluation section 550 may further include a pre-processing unit and a feature extraction unit to process the test speeches before they are provided to the computing unit 556 for evaluation. The pre-processing unit and the feature extraction unit may be substantially the same as the pre-processing unit 542 and the feature extraction unit 544, respectively, in the speech modeling section 540, and a repetitive description thereof will be omitted herein. The scores or the weighted scores for each test speech may be summed up in the computing unit 556, representing the evaluation result for the TTS engine.

Those skilled in the art may clearly know from the above embodiments that the present invention may be implemented by software with necessary hardware, or by hardware, firmware and the like. Based on such understanding, the embodiments of the present invention may be embodied in part in a software form. The computer software may be stored in a readable storage medium such as a floppy disk, a hard disk, an optical disk or a flash memory of the computer. The computer software comprises a series of instructions to make the computer (e.g., a personal computer, a service station or a network terminal) execute the method or a part thereof according to respective embodiment of the present invention.

The invention being thus described, it will be obvious that the same may be varied in many ways. Such variations are not to be regarded as a departure from the scope of the invention, and all such modifications as would be obvious to those skilled in the art are intended to be included within the scope of the following claims.

## Claims

1. A method for automatic text-to-speech, TTS, performance evaluation of different TTS engines, comprising:
providing a plurality of speech samples and scores associated with the respective speech samples;
pre-processing the plurality of speech samples so as to obtain respective waveforms;
extracting features from each of the pre-processed waveforms;
establishing a speech model based on said features extracted from the pre-processed waveforms obtained from the plurality of speech samples and the corresponding scores; and
evaluating a TTS engine by the speech model;
wherein the step of providing further comprises:
recording the plurality of speech samples from a plurality of speech sources based on a same set of training text and rating each of the plurality of speech samples to assign the score thereto;
wherein the plurality of speech sources includes a plurality of TTS engines and human beings with different dialects and different clarity of pronunciation; and
wherein the step of evaluating further comprises:
providing a set of test sentences to the TTS engine under evaluation;
receiving speeches converted by the TTS engine under evaluation from the set of test sentences; and
computing an evaluation score for each piece of speeches based on the established speech model, wherein a simple test sentence has a lower weight and a complex test sentence has a higher weight, and wherein each evaluation score is multiplied by the respective lower and higher weights, before being summed up for determining a final evaluation score.

2. A computer readable medium comprising executable instructions which when executed on a processor carries out the method according to claim 1.

## Patentansprüche

1. Verfahren für eine automatische Text-zu-Sprache(TTS)-Leistungsbewertung von unterschiedlichen TTS-Maschinen, umfassend:
Bereitstellen mehrerer Sprachproben und Noten, die den jeweiligen Sprachproben zugeordnet sind,
Vorverarbeiten der mehreren Sprachproben, um jeweilige Wellenformen zu erhalten;
Extrahieren von Merkmalen aus jeder der vorverarbeiteten Wellenformen;
Herstellen eines Sprachmodells basierend auf den Merkmalen, die aus den vorverarbeiteten Wellenformen extrahiert wurden, die aus den mehreren Sprachproben und den entsprechenden Noten erhalten wurden; und
Bewerten einer TTS-Maschine durch das Sprachmodell;
wobei der Schritt des Bereitstellens ferner umfasst:
Aufzeichnen der mehreren Sprachproben aus mehreren Sprachquellen basierend auf einem gleichen Satz von Trainingstext und Beurteilen jeder der mehreren Sprachproben, um die Note dazu zuzuweisen;
wobei die mehreren Sprachquellen mehrere TTS-Maschinen und Personen mit unterschiedlichen Dialekten und unterschiedlicher Aussprachedeutlichkeit umfasst; und
wobei der Schritt des Bewertens ferner umfasst:
Bereitstellen eines Satzes von Testsätzen zu der zu bewertenden TTS-Maschine;
Empfangen von Sprachstücken, die durch die zu bewertende TTS-Maschine aus dem Satz von Testsätzen umgewandelt wurde; und
Berechnen einer Bewertungsnote für jedes Sprachstück basierend auf dem hergestellten Sprachmodell, wobei ein einfacher Testsatz eine geringere Gewichtung aufweist und ein komplexer Testsatz eine höhere Gewichtung aufweist, und wobei jede Bewertungsnote mit den jeweiligen geringeren und höheren Gewichtungen multipliziert wird, bevor sie zum Bestimmen einer endgültigen Bewertungsnote aufsummiert wird.

2. Computerlesbares Medium, umfassend ausführbare Anweisungen, die, wenn sie auf einem Prozessor ausgeführt werden, das Verfahren nach Anspruch 1 ausführen.

## Revendications

1. Procédé dévaluation automatique de la performance d'une conversion texte-paroles TTS de différents moteurs de conversion TTS comprenant des étapes consistant à :
- se procurer un ensemble d'échantillons de paroles et de scores associées aux échantillons de parole respectifs,
- prétraiter les échantillons de paroles de l'ensemble d'échantillons de paroles pour obtenir des formes d'onde respectives,
- extraire des caractéristiques de chacune des formes d'onde prétraitées,
- établir un modèle de paroles fondé sur ces caractéristiques extraites des formes d'onde prétraitées obtenues à partir de l'ensemble d'échantillons de paroles et des scores correspondants, et
- évaluer un moteur de conversion TTS par le modèle de parole,
l'étape consistant à se procurer des échantillons de paroles et des scores comprenant en outre des étapes consistant à :
- enregistrer les échantillons de paroles de l'ensemble d'échantillons de paroles à partir d'un ensemble de sources de paroles basé sur un même jeu de textes d'entraînement et noter chacun des échantillons de paroles de l'ensemble d'échantillons de paroles pour attribuer un score à celui-ci,
- les sources de paroles de l'ensemble de sources de paroles comprenant un ensemble de moteurs de conversion TTS et d'êtres humains ayant différents langages et différentes clartés de prononciation, et
l'étape d'évaluation comprenant en outre des étapes consistant à :
- fournir un jeu de phrases de texte au moteur de conversion TTS en cours d'évaluation,
- recevoir des paroles converties par le moteur de conversion TTS en cours d'évaluation à partir du jeu de phrases de texte,
- calculer un score d'évaluation pour chaque élément de paroles sur le fondement du modèle de paroles établi, une phrase texte simple ayant un plus petit poids et une phrase de texte complexe ayant un plus grand poids, et chaque score d'évaluation étant respectivement multiplié par le plus petit poids et par le plus grand poids avant d'être additionné pour déterminer un score d'évaluation final.

2. Support lisible par un calculateur renfermant des instructions exécutables qui, lorsqu'elles sont exécutées sur un ordinateur mettent en oeuvre le procédé conforme à la revendication 1.
